# FASCICULE DE BREVET EUROPEEN

(11) **EP 2 367 972 B1**
(45) Date de publication et mention de la délivrance du brevet: **09.09.2015**
(21) Numéro de dépôt: 09803801.1
(22) Date de dépôt: 02.12.2009
(51) Int. Cl.: D06N 3/00, D06N 3/10, D06N 7/00, B60D 5/00, B61D 17/22, D03D 11/00, D03D 15/00, B64F 1/305

(54) **TISSU-DOUBLE ETOFFE REFETU ET SON UTILISATION POUR LA FABRICATION DE SOUFFLETS D' INTERCOMMUNICATION**
BESCHICHTETES ZWEILAGIGES TEXTILES FLÄCHENGEBILDE UND SEINE VERWENDUNG ZUR HERSTELLUNG VON MITEINANDER IN VERBINDUNG STEHENDEN BÄLGEN
COATED TWO-PLY FABRIC AND ITS USE FOR THE MANUFACTURE OF INTERCONNECTING BELLOWS

(30) Priorité: 02.12.2008 FR 0806762
(43) Date de publication de la demande: 28.09.2011
(73) Titulaire: Pennel Et Flipo SPRL, 7700 Mouscron (BE)
(72) Inventeur: MAERTEN, Gérard, F-59290 Wasquehal (FR)
(74) Mandataire: Novagraaf Technologies
(86) Numéro de dépôt international: PCT/FR2009/052371
(87) Numéro de publication internationale: WO 2010/063949

(56) Documents cités:
- DE-A1- 4 007 862
- DE-A1-102004 043 193
- DE-A1-102006 058 470
- DE-A1-102006 061 503
- DE-B3- 10 246 236
- DATABASE WPI Week 200650 Thomson Scientific, London, GB; AN 2006-484845 XP002571601 & JP 2006 176056 A (TOYO RUBBER IND CO LTD) 6 juillet 2006 (2006-07-06)

## Description

### Domaine technique

La présente invention concerne un support textile revêtu d'une matière élastomère destiné à la confection de soufflets d'intercommunication connectant (reliant) deux compartiments d'un véhicule de transport en commun (train, métro, tramway, bus, avion...) ou de soufflets d'intercommunication de rampes d'accès amovibles pour avion. Tout particulièrement, l'invention concerne l'utilisation d'un support textile revêtu comprenant un tissu double-étoffe dont les deux faces sont revêtues (recouvertes) d'une matière élastomère pour la fabrication de soufflets d'intercommunication connectant (reliant) deux compartiments d'un véhicule de transport en commun. L'invention concerne également un soufflet d'intercommunication de deux compartiments d'un véhicule de transport en commun ou d'une rampe d'accès amovible pour avion, caractérisé en ce que ledit soufflet est constitué d'un support textile revêtu d'une matière élastomère selon l'invention, ainsi qu'un procédé de connection de deux compartiments d'un véhicule de transport en commun comprenant la fixation d'un soufflet d'intercommunication selon l'invention entre deux compartiments du véhicule attelés l'un à l'autre. L'invention concerne également un véhicule de transport en commun comprenant des compartiments connectés (reliés) entre eux par un soufflet d'intercommunication selon l'invention.

Dans la description ci-dessous, les références entre crochets ([]) renvoient à la liste des références présentée après les exemples.

### État de la technique

Les soufflets d'intercommunication connectant (reliant) deux compartiments d'un véhicule de transport en commun sont typiquement fabriqués avec des supports textiles revêtu de matière élastomère dans lesquels on recherche la rigidité pour les parties verticales et horizontales du soufflet, les angles (ou arrêtes) étant réalisées avec des supports textiles revêtus de matière élastomère souples.

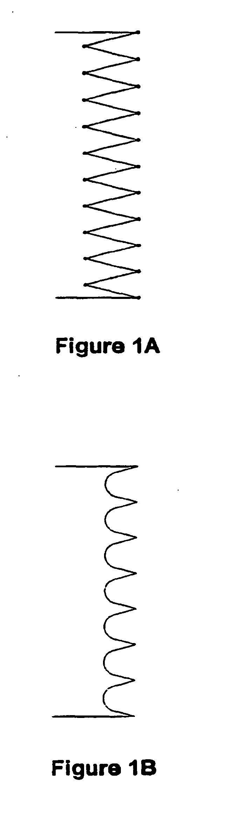

Il existe actuellement sur le marché deux types de soufflets destinés à la confection de soufflets d'intercommunication connectant (reliant) deux compartiments d'un véhicule de transport en commun : les soufflets pliés (Figure 1A), et les soufflets ondulés (Figure 1B).

La présente invention concerne un support textile revêtu pour la réalisation de soufflets où la rigidité du support textile revêtu est la propriété la plus importante à considérer.

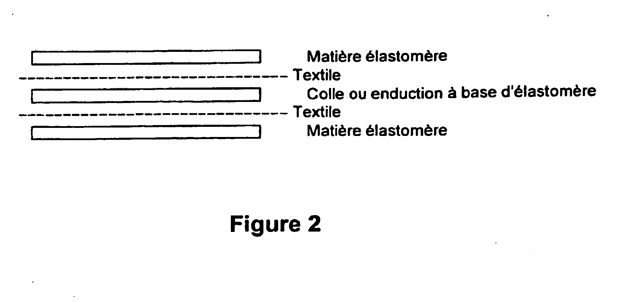

En particulier, actuellement, les supports textiles revêtus destinés à la fabrication de soufflets sont réalisés à partir de deux supports textiles reliés entre eux par une colle ou une enduction à base d'élastomère, l'ensemble étant recouvert d'une matière élastomère. Une illustration schématique de ce mode d'assemblage est donnée sur la Figure 2.

Cette construction permet d'avoir un effet de poutre (i.e ., le moyen d'assemblage travaille en flexion de façon analogue à une poutre) qui assure la rigidité. Ce mode d'assemblage présente toutefois les inconvénients suivants :
□ Procédé (« Process ») de fabrication compliqué, et par conséquent un coût élevé de fabrication.
□ Adhérence entre les deux supports textiles limitée.
□ Cette limitation en adhérence affecte le vieillissement du produit, avec en particulier un décollement possible des deux couches de tissu dû aux flexions répétées.

Il existe donc un réel besoin de développer des matériaux utilisables dans la fabrication de soufflets d'intercommunication de compartiments de véhicules de transport en commun et palliant les défauts et inconvénients précités de l'art antérieur, en particulier des matériaux permettant de satisfaire pleinement les nouvelles Normes Européennes ainsi que les autres normes existant dans ce champ d'application, tout en gardant les coûts de fabrication à un niveau raisonnable et en conservant les propriétés mécaniques avantageuses desdits soufflets.

### Description de l'invention

La présente invention a pour but de proposer un support textile revêtu d'une matière élastomère répondant aux exigences précitées tout en restant économiquement viable. En particulier, la présente demande concerne un tissu double-étoffe revêtu d'une matière élastomère.

Un autre objet de la présente invention est de proposer un soufflet d'intercommunication de compartiments d'un véhicule de transport en commun ou d'une rampe d'accès amovible pour avion, caractérisé en ce que ledit soufflet est constitué d'un support textile revêtu d'une matière élastomère comprenant un tissu double-étoffe dont les deux faces sont recouvertes d'une matière élastomère. Le véhicule de transport en commun est avantageusement un véhicule de transport terrestre, notamment routier ou sur rails, tel qu'un train, tramway, bus ou rame de métro. Le soufflet d'intercommunication peut également trouver applications dans les rampes d'accès amovibles utilisées pour l'embarquement des passagers dans les avions de ligne.

Un autre objet de la présente invention concerne l'utilisation d'un tissu double-étoffe revêtu d'une matière élastomère pour la fabrication de soufflets d'intercommunication de compartiments d'un véhicule de transport en commun, ou de rampe d'accès amovible pour avion.

Dans la présente, les expressions « support textile revêtu » et « support textile revêtu d'une matière élastomère » sont utilisées de manière interchangeable.

On entend par « matière élastomère » un mélange d'un ou plusieurs élastomères et d'additifs, ces derniers visant à permettre la transformation/mise en forme de l'élastomère ou du mélange de plusieurs élastomères, et à atteindre les propriétés souhaitées de la matière élastomère revêtant le support textile. Ces additifs peuvent être par exemple de la silice, des plastifiants, des retardateurs de flamme, des agents de protection et/ou des agents de réticulation.

On entend par « compartiments » des compartiments de taille et de forme éventuellement différentes, et qui, en cours de déplacement, sont animés d'un mouvement éventuellement différentiel relatif à une ou plusieurs des variables suivantes :
- l'inclinaison horizontale et/ou verticale par rapport au sol
- la direction du déplacement, et/ou
- la vitesse du déplacement

Ainsi, un premier aspect de l'invention consiste en un support textile revêtu d'une matière élastomère, et caractérisé en ce qu'il comprend un tissu double-étoffe dont les deux faces sont revêtues (recouvertes) d'une matière élastomère.

On entend par « tissu double-étoffe » un support textile constitué de deux tissus, distincts et superposés, qui sont intimement reliés entre eux par intermittence à espaces réguliers par des fils de trame des deux tissus, avec la participation du fil de chaîne. Par exemple, un fil de chaîne d'un des tissus peut, selon une séquence prédéterminée, être lié avec une trame (ou duite) de l'autre tissu pour former un seul et même tissu. Cette liaison peut se faire selon tout type de motif, classiquement pour former des losanges, carrés, rectangles ou bien des tubes. Les fils de l'un des tissus participent à la liaison avec le deuxième tissu de sorte que les deux tissus constituant le tissu double-étoffe sont parfaitement solidaires. Il n'y a pas d'espace entre les deux tissus constituant le tissu double-étoffe. Par ailleurs, les deux tissus ne peuvent pas bouger l'un par rapport à l'autre : on a affaire à un seul et même tissu double-étoffe. Le nombre de jonctions détermine la rigidité du tissu double-étoffe.
Le tissu double-étoffe de la présente invention est à distinguer du tissu double-paroi dans lequel deux tissus, distincts et superposés, sont reliés entre eux par intermittence par un fil de liaison des deux tissus (c'est-à-dire que les deux tissus ne sont pas parfaitement solidaires). A titre d'exemple de tissus double-paroi, on peut citer ceux décrits dans les documents DE 40 07 862 (DE'862) [ref 2] et DE 10 2006 061503 (DE'503) [ref 3]. Dans DE'862, les deux tissus constituant le tissu double-pli sont reliés par des fils élastiques. Dans DE'503, un espace existe entre les deux tissus constituant le tissu double-paroi. Ainsi, les deux épaisseurs de tissu dans DE'862 et DE'503 ne sont aucunement solidaires, et le tissu double-paroi qui en résulte n'a pas les propriétés de rigidité requises (« effet de poutre ») du tissu double-étoffe de la présente invention.

Le terme « tissu » est pris dans son acception conventionnelle, c'est-à-dire un matériau obtenu par tissage.
Les deux tissus précités constituant le tissu double-étoffe peuvent être identiques ou différents.

Les utilisations actuelles de ce type de tissu double-étoffe sont les airbags, les vêtements de pompiers (isolation thermique) et les tissus d'ameublement (effet décoratif dû à la construction du tissu double-étoffe).

Généralement, selon l'état de la technique, on peut inverser les faces envers et endroit de coloris différents pour obtenir un effet décoratif (tissu d'ameublement).

Ce tissu double-étoffe est typiquement réalisé en une seule opération sur un métier à tisser.

Concernant le tissu double-étoffe, de préférence, les fils textiles posséderont les caractéristiques suivantes :
- Propriétés mécaniques élevées :
   ∘ ténacité de 50 à 110 cN/Tex (ISO.13934-1),
   ∘ allongement à la rupture supérieur à 10% (ISO 13934-1). De préférence, les fils textiles du tissu double-étoffe ont un allongement à la rupture entre 10 et 50%, avantageusement entre 10 et 40%, plus préférentiellement entre 10 et 30%, entre 10 et 25%, voire entre 10 et 20% (mesuré selon la norme ISO 13934-1).

Avantageusement, les fils textiles reliant les deux tissus sont des fils non-élastiques.

Par exemple, le tissu double-étoffe peut comprendre des fils
- polyamide, comme les fils en polyamide 6 ou 66
- polyester
- m-aramide, comme ceux commercialisés par la Société KERMEL sous la même dénomination, les fils commercialisés sous la marque NOMEX® par la société DUPONT DE NEMOURS et ceux commercialisés sous la marque CONEX® par la société TEIJIN.
- p-aramide, comme ceux commercialisés par la Société DU PONT DE NEMOURS sous la dénomination KEVLAR® ou par la société TEIJIN sous les marques TWARON® et TECHNORA®. De tels polymères, qui peuvent donc se présenter sous la forme de fibres, fils, ou autres structures, ont fait l'objet de nombreuses publications parmi lesquelles on peut citer le brevet US 3,063,966.
- vectran HS
- polyimide
- polyamide-imide
- homopolymère acrylique
- polyacrylonitrile oxydé (PAN)
- phénolique
- polybenzimidazole (PBI)
- polysulfure de phénylène (PPS)
- polytétrafluoroéthylène (PTFE)
- polyétheréthercétone (PEEK)
- polycétone [poly(1-oxotriméthylène)]
- polyphénylsulfone
- ou d'un mélange de ceux-ci.

Ainsi, dans un mode de réalisation, le tissu double-étoffe comprend des fils polyamide, polyester, aramide ou polyphénylsulfone, ou un mélange de ceux-ci.

Avantageusement, le tissu double-étoffe comprend des fils polyester.

Dans un mode de réalisation, les fils du tissu double-étoffe ont une masse linéique de 500 à 2200 décitex, par exemple de 600 à 2000 décitex, de 700 à 1800 décitex, de 800 à 1600 décitex, de 900 à 1400 décitex, de 1000 à 1200. décitex. Avantageusement, les fils ont une masse linéique de 1100 décitex.

Dans un mode de réalisation, le tissu double-étoffe a une contexture de 8/8 à 11/10 fils au centimètre, c'est-à-dire de 8 à 11 fils/cm en chaîne et 8 à 10 fils/cm en trame. Dans un mode de réalisation particulier, le tissu double-étoffe a une contexture de 8,6/9 fils au centimètre.

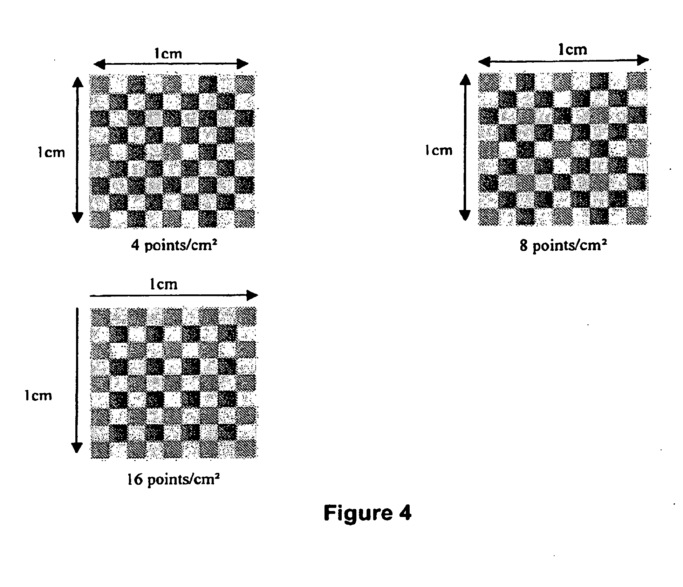

Dans un mode de réalisation, le nombre de points de jonction du tissu double-étoffe est de 2 à 20 points/cm², par exemple de 2 à 16 points/cm², par exemple de 2 à 8 points par cm². Avantageusement, le nombre de points de jonction du tissu double-étoffe est de 4 points/cm², de préférence 8 points/cm². Des exemples de points de jonction sont représentés en Figure 4.

Le nombre de points de jonction sera choisi en fonction de l'utilisation envisagée, et en particulier de la rigidité requise pour l'application envisagée. Plus le nombre de points de jonctions est élevé, plus la rigidité du tissu double-étoffe revêtu de la présente invention est élevée. La rigidité peut être déterminée par exemple par la méthode dite « de la boucle plate », ou par la méthode dite « de la longueur fléchie sous son poids », selon la norme NF EN 1735.

Dans un mode de réalisation, le tissu double-étoffe comprend des fils polyester de masse linéique de 1100 décitex, a une contexture de 8.6/9 fils au centimètre, et a un nombre de points de jonction de 8 points/cm².

Dans un mode de réalisation, la matière élastomère peut comprendre tout élastomère disponible sur le marché, en particulier ceux ayant d'excellentes propriétés mécaniques et de vieillissement, adaptées aux normes européennes précitées relevant du domaine des soufflets d'intercommunication. L'homme du métier pourra se référer pour ce faire à l'ouvrage « Synthèse, propriétés et technologies des élastomères » réalisé par l'IFOCA (Institut de Formation du Caoutchouc) et édité par le groupe français d'études et d'application des polymères en octobre 1984 [ref. 1].

Par exemple, il peut s'agir de :
1) Élastomères à Usages Généraux, tels que le terpolymère d'éthylène propylène et diène (EPDM) ;
2) Élastomères à Usages Spécifiques, tels que le polychloropréne (CR), un copolymère de nitrile acrylique hydrogéné et de butadiène (HNBR), des copolymères d'éthylène et d'acrylate de méthyle ou autres acrylates (ACM, AEM), des polyuréthanes (AU, EU) ;
3) Élastomères à Usages Spéciaux, tels que le polychloroéthylène (CM), le polyéthylène chlorosulfoné (CSM), un copolymère d'épichlorhydrine (ECO), un élastomère de silicone vulcanisable à chaud (EVC), un élastomère fluorocarboné (FPM) ;
ou d'un mélange de ceux-ci.

Avantageusement, la matière élastomère peut comprendre du polyéthylène chlorosulfoné (CSM) en tant qu'élastomère.

Dans un mode de réalisation, la matière élastomère peut comprendre le polyéthylène chlorosulfoné en tant qu'élastomère, et le tissu double-étoffe comprend des fils polyester de masse linéique de 1100 décitex, a une contexture de 8,6/9 fils au centimètre (c'est-à-dire 8,6 fils/cm en chaîne et 9 fils/cm en trame), et a un nombre de points de jonction de 8 points/cm².

L'élastomère peut être linéaire ou ramifié, et est de préférence vulcanisable à chaud.
La matière élastomère peut contenir des charges comme, par exemple, la silice, des plastifiants, des retardateurs de flamme (alumine hydratée), des agents de protection, et/ou des agents de réticulation. Ces additifs visent à atteindre les propriétés souhaitées de la matière élastomère, et à permettre la transformation/mise en forme de l'élastomère ou du mélange d'élastomères utilisé.

Selon un mode de réalisation, le poids total du support textile revêtu selon l'invention est compris entre 600 et 4400 g/m², par exemple entre 1000 et 3000 g/m², par exemple 1200 g/m². Il est entendu que le poids total du support textile revêtu peut être ajusté à la commande, c'est-à-dire selon les besoins. Typiquement, le poids total du support textile revêtu peut être ajusté à toute valeur souhaitée entre 1000 et 3000 g/m².

Selon un mode de réalisation particulier de l'invention, la ténacité de la fibre du tissu double-étoffe est supérieure ou égale à 50 cN/Tex (ISO 13934-1) et son allongement à la rupture supérieur ou égal à 10% (ISO 13934-1). De préférence, la fibre du tissu double-étoffe a un allongement à la rupture entre 10 et 50%, avantageusement entre 10 et 40%, plus préférentiellement entre 10 et 30%, entre 10 et 25%, voire entre 10 et 20% (mesuré selon la norme ISO 13934-1).

Lorsque les supports textiles revêtus selon l'invention sont utilisés pour des soufflets d'intercommunication de compartiments de véhicules ferroviaires, ils devront notamment répondre au projet de Norme Européenne : TS EN 45545-2, qui prévoit notamment des mesures de protection contre les incendies dans les véhicules ferroviaires, et en particulier des exigences de sécurité incendie pour la conception des véhicules ferroviaires.

Sur ce point, l'harmonisation des Normes Européennes a entraîné une homogénéisation sur la base des exigences les plus élevées, notamment sur les critères relatifs au feu, à l'opacité des fumées et à la toxicité des gaz d'émission, les exigences mécaniques et de vieillissement restant inchangées.

À ceci s'ajoutent de nouvelles contraintes environnementales.

Ainsi, selon les nouvelles normes, la combustion du matériel constituant les véhicules de transport en commun (p. ex. les soufflets d'intercommunication) doit se faire (i) avec un minimum de flamme, (ii) avec une opacité réduite des fumées et (iii) en dégageant le minimum de produits toxiques.

Les supports textiles revêtus selon l'invention pourront répondre également à d'autres normes que celles précitées, notamment celles en vigueur hors Europe, en fonction du pays concerné et de l'utilisation du soufflet d'intercommunication (type de véhicule de transport en commun, ou rampe d'accès amovible pour avion).

En conséquence, selon les réglementations en vigueur, la composition des supports textile revêtus d'une matière élastomère constituant les soufflets d'intercommunication peut répondre notamment à trois contraintes principales, qui sont les suivantes :
- contraintes mécaniques : les soufflets doivent présenter une certaine résistance à la rupture, résistance à la déchirure et résistance aux flexions répétées.
- Contraintes de vieillissement : les soufflets ont une durée de vie longue (supérieure à 10 ans) et doivent donc être particulièrement résistants aux agressions climatiques (UV, ozone, chaleur, froid, pluie...) et chimiques (acides, solvants, graisses, huiles, ...)
- Contraintes de feu : en cas d'incendie, les soufflets doivent résister au feu et dégager le minimum de fumée avec le minimum de toxicité.

Ainsi, lorsque cela est souhaité, ou lorsque les réglementations en vigueur l'exigent, le tissu double-étoffe peut être à base de matériaux textiles résistant à la chaleur et à la combustion.

Par exemple, la matière élastomère recouvrant le tissu double-étoffe pourra avoir un excellent vieillissement aux intempéries et une faible combustibilité. La matière élastomère pourra également avoir une opacité des fumées réduite. Dans un mode de réalisation particulier, l'élastomère ou le mélange d'élastomère utilisé dans la matière élastomère ne comprendra pas ou peu d'halogènes. Par exemple, la matière élastomère peut comprendre du silicone vulcanisable à chaud en tant qu'élastomère.

Lorsque cela est souhaité (par exemple quand les réglementations en vigueur le requièrent), les fils textiles peuvent également avoir une résistance à la combustion ; par exemple, le produit ne s'enflamme pas facilement ou pas du tout. Dans un mode de réalisation, les fils textiles du tissu double-étoffe pourront également être tels que leurs gaz de combustion sont non ou peu toxiques et sans fumée trop importante.

Dans un mode de réalisation, les fils textiles du tissu double-étoffe auront également de préférence un prix économiquement acceptable.

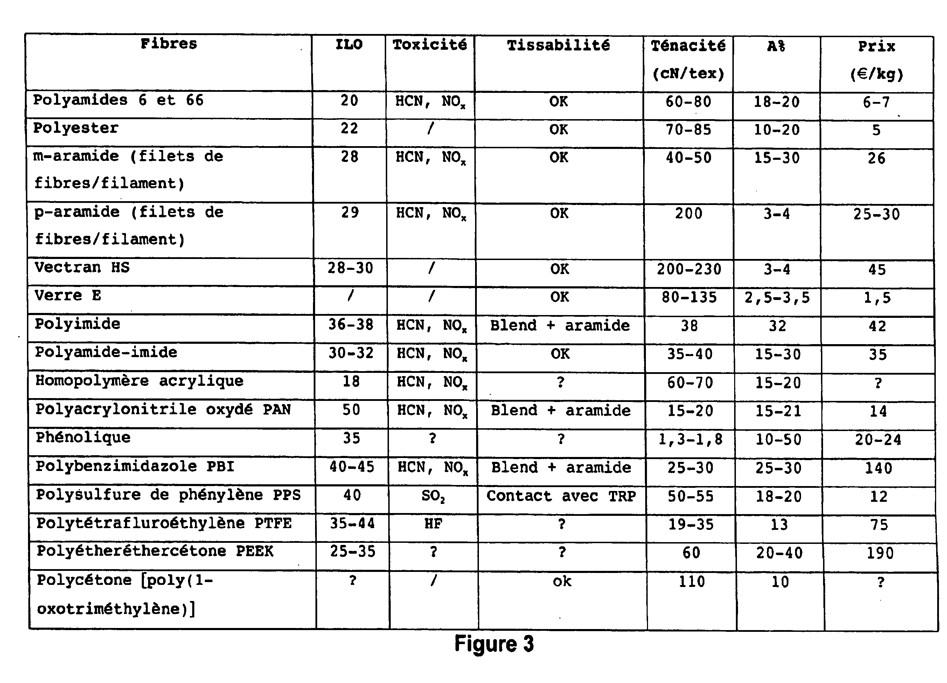

La Figure 3 donne des gammes de valeurs des propriétés précitées pour certaines fibres textiles disponibles sur le marché. Le lecteur pourra s'y référer afin de sélectionner le type de fibre pour une utilisation particulière avec les performances mécaniques, la résistance à la combustion et le prix souhaités. On notera que le verre, de faible coût, ne peut convenir car son manque d'allongement à la rupture (3 à 4%) le rend cassant aux flexions répétées.

Lorsque cela est souhaité, ou lorsque les réglementations en vigueur l'exigent, le support textile revêtu selon l'invention peut présenter une ou plusieurs des propriétés suivantes (avantageusement les quatre) :
(i) résistance au feu
(ii) auto-extinction
(iii) n'entretient pas la combustion
(iv) n'est pas fumigène.

Ainsi, selon un mode de réalisation de l'invention, la matière élastomère recouvrant le support textile revêtu peut comprendre un additif choisi parmi le groupe comprenant les additifs permettant l'amélioration de l'adhésivité, de la durabilité et/ou de la résistance au feu.

Selon un mode de réalisation de l'invention, le support textile revêtu comprend une quantité en poids de produits toxiques inférieure à 8% par rapport au poids total dudit support textile revêtu, lesquels produits toxiques sont choisis dans le groupe comprenant les phtalates, les métaux lourds, les halogènes, ou un mélange de ceux-ci. Selon un mode de réalisation particulier, le support textile revêtu comprend une quantité en poids desdits produits toxiques inférieure à 7%, 6% ; 5%, 4%, 3%, 2%, 1% par rapport au poids total dudit support textile revêtu.

Selon un mode de réalisation de l'invention, le support textile revêtu selon l'invention n'est pas fumigène. On entend par « n'est pas fumigène » n'émettant pas ou peu de fumée lors de sa combustion; par exemple émettant 50% de moins de fumée, ou encore 60% de moins de fumée, ou encore 70% de moins de fumée, ou encore 75% de moins de fumée, ou encore 80% de moins de fumée, ou encore 85% de moins de fumée, ou encore 90% de moins de fumée, ou encore 95% de moins de fumée, par rapport aux produits composites de l'art antérieur (par exemple ceux précités).

Selon un mode de réalisation particulier de l'invention, le support textile revêtu selon l'invention ne dégage pas (ou peu) de gaz toxiques lors de sa combustion. Par exemple, le support textile revêtu dégage entre 50 et 95% de moins de gaz toxiques en volume par rapport aux produits composites de l'art antérieur, le volume étant mesuré dans des conditions identiques de température et de pression. A titre d'exemple, les gaz toxiques sont choisis parmi le groupe comprenant l'acide cyanhydrique (HCN), NOx, halogènes ou un mélange de ceux-ci.

En ce qui concerne la fabrication du support textile revêtu de la présente invention, le dépôt de la matière élastomère sur le support textile peut se faire soit par enduction, soit par calandrage, soit par extrusion filière plate.

Selon le poids du support textile revêtu souhaité, il peut être déposé plusieurs couches de matière élastomère.

Le mode de dépôt par enduction permet d'obtenir un poids relativement faible de matière élastomère (entre 15 et 50 g/m² par couche) avec une grande uniformité.

Le mode de dépôt par calandrage permet d'obtenir des poids plus importants allant de 100 à 1000 g/m² par couche successive.

Le mode de dépôt par extrusion filière plate permet d'obtenir des poids allant de 150 à 1500 g/m² en une seule couche.

Ainsi, dans un mode de réalisation particulier de l'invention, le support textile revêtu est susceptible d'être fabriqué par enduction, calandrage ou extrusion filière plate. Plus particulièrement, le support textile revêtu selon l'invention est susceptible d'être fabriqué par calandrage d'une matière élastomère et d'un tissu double-étoffe préalablement ou non adhérisé sur les deux faces avec une colle.

Selon un mode de réalisation particulier, le tissu double-étoffe pourra avoir reçu, au préalable, un dépôt de pâte d'adhérisation (notamment une colle) pour permettre une bonne adhérence entre le tissu double-étoffe et la matière élastomère.

La pâte d'adhérisation peut être constituée, par exemple, d'une colle sous forme pâteuse. La pâte d'adhérisation peut être préparée selon les règles de l'art. Notamment, elle peut être à base de solvants ou d'eau (latex), elle peut être fonction du type d'élastomère(s) utilisé(s), du tissu à adhériser, du système d'évaporation utilisé, ainsi que d'autres considérations relatives à l'environnement.

Dans un mode de réalisation particulier, la pâte d'adhérisation est étalée sur les deux faces du tissu double-étoffe. Dans le cadre de ce mode de réalisation, l'adhérisation peut être réalisée par enduction (racles, cylindres ou pistolets) ou par imprégnation (bain et éventuellement essorage). Dans le cas d'une adhérisation par enduction, la pâte d'adhérisation peut être la même ou différente de chaque côté du tissu double-étoffe. Dans un mode de réalisation particulier, notamment lorsque l'adhérisation est réalisée par imprégnation, la pâte d'adhérisation est la même de chaque côté du tissu double-étoffe.

L'épaisseur de la pâte d'adhérisation peut être la même ou différente de chaque côté du tissu double-étoffe. Dans un mode de réalisation particulier, l'épaisseur de la pâte d'adhérisation est sensiblement la même de chaque côté du tissu double-étoffe. Par exemple, la pâte d'adhérisation est enduite ou imprégnée avec une épaisseur de 15 à 60 g/m².

Avantageusement, la pâte d'adhérisation est soumise à une opération de séchage pour éliminer les solvants ou l'eau, et sécher la pâte d'adhérisation avant dépôt de la matière élastomère.

Dans certains modes de réalisation particuliers, la température de séchage est comprise entre 80 et 170°C, selon les solvants utilisés. Les temps de séchage sont fonction de la longueur du tunnel de séchage utilisé. Généralement, ce temps est compris entre 1 à 2 minutes.

Dans certains modes de réalisation particuliers, le dépôt de la matière élastomère sur le tissu double-étoffe ainsi adhérisé est effectué par calandrage.

Avantageusement, une fois le tissu double-étoffe recouvert de matière élastomère, celui-ci est soumis à une étape de vulcanisation/réticulation.

Un objet de la présente invention concerne l'utilisation d'un support textile revêtu selon l'invention pour la fabrication de soufflets d'intercommunication de compartiments d'un véhicule de transport en commun, ou d'une rampe d'accès amovible pour avion. Plus particulièrement, le support textile revêtu de l'invention intervient dans la fabrication de soufflets d'intercommunication connectant (reliant) deux compartiments d'un véhicule de transport en commun terrestre, notamment routier ou sur rails. Par exemple, le support textile revêtu de l'invention est utilisé dans la fabrication de soufflets d'intercommunication connectant (reliant) deux compartiments de train, de métro, de tramway et/ou de bus.

Un objet de la présente invention concerne également l'utilisation d'un tissu double-étoffe pour la fabrication de soufflets d'intercommunication connectant (reliant) deux compartiments d'un véhicule de transport en commun, ou d'un soufflet d'intercommunication d'une rampe d'accès amovible pour avion.

Un autre objet de la présente invention concerne un soufflet d'intercommunication de compartiments d'un véhicule de transport en commun ou d'une rampe d'accès amovible pour avion, ledit soufflet comprenant un support textile revêtu selon l'invention. Plus particulièrement, le soufflet d'intercommunication connecte (relie) deux compartiments d'un véhicule de transport en commun terrestre, notamment routier ou sur rails. Par exemple, le soufflet d'intercommunication connecte (relie) deux compartiments de train, de métro, de tramway et/ou de bus.

Selon un mode de réalisation, il est fourni un soufflet d'intercommunication de compartiments d'un véhicule de transport en commun ou d'une rampe d'accès amovible pour avion, caractérisé en ce que ledit soufflet est constitué d'un support textile revêtu d'une matière élastomère comprenant un tissu double-étoffe dont les deux faces sont recouvertes d'une matière élastomère, ledit support textile revêtu ayant une rigidité de 58 à 70 mm dans le sens longitudinal et transversal selon la norme NF EN 1735.

Les méthodes de fabrication de soufflets à partir de supports textiles revêtus sont bien connues.

Par exemple, si le support textile revêtu est vulcanisé, le soufflet peut être confectionné par couture avec dépôt d'une colle ou d'un produit de protection permettant de protéger le fil de couture et de colmater les piqûres (trous formés par l'aiguille de couture). La colle ou le produit de protection peut également permettre d'imperméabiliser le soufflet.

Si le support textile revêtu n'est pas vulcanisé, le soufflet peut être confectionné en déposant le support textile revêtu dans un moule de forme souhaitée. Puis, on procède à une vulcanisation sous pression et à chaud. L'homme du métier pourra adapter ces méthodes à la fabrication des soufflets d'intercommunication selon la présente invention.

Un autre objet de la présente invention concerne un procédé de connection (liaison) de deux compartiments d'un véhicule de transport en commun comprenant une étape de fixation des extrémités d'un soufflet d'intercommunication selon l'invention sur les faces frontales orientées l'une vers l'autre de deux compartiments dudit véhicule de transport en commun. Une extrémité du soufflet est fixée sur une face frontale d'un premier compartiment. L'autre extrémité du soufflet est fixée sur la face frontale du deuxième compartiment orientée vers le premier compartiment. Les extrémités du soufflet d'intercommunication peuvent être fixées aux deux compartiment au moyen de cadres épousant la forme des faces frontale des compartiment à connecter ou à relier. Le soufflet d'intercommunication entoure de ce fait les ouvertures de passage aménagées entre les compartiments, permettant ainsi la circulation des passagers d'un compartiment à l'autre sans être exposés à l'environnement extérieur.

Lorsque la connection (liaison) entre les compartiments du véhicule comporte un plateau tournant visant à former une articulation des deux compartiments (permettant la prise de virages serrés), le soufflet d'intercommunication des moyens de fixation peuvent être prévus également sur le plateau tournant.

Il s'agit de techniques de fixation des plus conventionnelles que l'homme du métier saura sélectionner en fonction du type de véhicule et de la forme des compartiments à connecter (relier).

Un autre objet de la présente invention concerne un véhicule de transport en commun comprenant des compartiments connectés (reliés) entre eux par un soufflet d'intercommunication selon l'invention. Les soufflets d'intercommunication pour véhicules terrestres (notamment routiers ou sur rails), ainsi que leur mise en place dans ces véhicules pour assurer l'intercommunication (ou l'intercirculation) entre deux compartiments successifs du véhicule, sont bien connus. Il s'agit de techniques des plus classiques connues de l'homme du métier, qui saura adapter ces méthodes à l'installation d'un soufflet d'intercommunication selon l'invention dans les véhicules de transport en commun visés.

Dans chacun des modes de réalisation décrits dans la présente, le véhicule de transport en commun peut être par exemple un véhicule de transport terrestre (notamment routier ou sur rails). Par exemple, il peut s'agir d'un train, d'une rame de métro, d'un tramway et/ou d'un bus.

Dans chacun des modes de réalisation décrits dans la présente, le soufflet d'intercommunication peut être un soufflet plié ou ondulé.

Ainsi, le support textile revêtu d'une matière élastomère selon la présente invention a la rigidité requise pour permettre la fabrication de soufflets d'intercommunication pour véhicules de transport en commun (notamment les trains). Cette rigidité est assurée par la structure même du tissu double-étoffe.

D'autre part, la liaison mécanique entre les deux couches textiles du double-étoffe est fortement augmentée (voir Exemple 1). Cette caractéristique permet de réduire considérablement les décollements dus aux flexions répétées. A titre d'exemple, les mesures d'adhérence par pelage selon la norme ISO 2411 pour les support textiles revêtus classiques (c'est-à-dire deux tissus collés ensemble, le tout revêtu d'une matière élastomère) sont de 10 à 15 daN/5 cm. Au contraire, le tissu double-étoffe revêtu d'une matière élastomère selon la présente invention a une adhérence par pelage supérieure ou égale à 20 daN/5 cm (notamment pour ceux réalisés à partir de tissu double-étoffe de 4 points/cm²), voire supérieure ou égale à 30 daN/5 cm (notamment pour ceux réalisés à partir de tissu double-étoffe de 8 points/cm²), voire difficile à déterminer (ce qui tend à indiquer que le tissu double-étoffe revêtu d'une matière élastomère selon la présente invention n'est difficilement délaminable, voire non-délaminable). Le tissu double-étoffe revêtu d'une matière élastomère selon l'invention offre donc une résistance à la délamination bien supérieure aux supports textiles revêtus classiques de l'art antérieur.

Par ailleurs, la résistance à la déchirure du tissu double-étoffe revêtu d'une matière élastomère est également fortement augmentée (voir Exemple 1). Ainsi, le tissu double-étoffe revêtu d'une matière élastomère selon la présente invention a une résistance à la déchirure bien supérieure aux supports textiles revêtus classiques de l'art antérieur : supérieure ou égale à 40 daN contre 15 à 20 DaN, respectivement (norme ISO 4674-1, méthode B (déchirure du pantalon à une seule entaille)).

En outre, le tissu double-étoffe revêtu d'une matière élastomère selon l'invention élimine totalement le recours à la colle ou enduction à base d'élastomère des supports textiles revêtus de l'art antérieur (Figure 2), qui vise à assurer l'adhérence entre les deux supports textiles dans les matériaux destinés à la fabrication de soufflets. Ici, aucune colle ou enduction à base d'élastomère n'est nécessaire. L'adhésion des deux tissus textiles est assurée par la structure même du tissu double-étoffe. Il en résulte trois avantages notables :
- il n'y a pas de décollement possible puisque le tissu double-étoffe est solidaire et se comporte comme un seul et même tissu. L'inconvénient du décollement provoqué par les flexions répétées s'en trouve donc éliminé.
- le poids du support textile revêtu final s'en trouve diminué (la colle/enduction de liaison est supprimée) sans pour autant affecter les propriétés mécaniques et de rigidité du produit final
- à l'inverse, la quantité de colle/enduction à base d'élastomère utilisée dans les matériaux double-pli conventionnels (Figure 2) peut être supprimée au profit d'une quantité équivalente de matière élastomère recouvrant les deux faces du tissu double-étoffe. Ainsi, à poids égal, le support textile revêtu selon l'invention est doté de meilleures propriétés de vieillissement par rapport aux matériaux actuellement disponibles sur le marché. (plus de revêtement de matière élastomère tout en gardant le même poids).

Par ailleurs, le processus de fabrication du support textile revêtu selon l'invention se trouve simplifié puisqu'il n'y a plus de dépôt de colle entre les deux tissus. Ce dépôt nécessite 6 passages machine (une imprégnation et deux enductions par tissu), alors qu'avec le tissu double-étoffe, il est ramené à 1 passage (une imprégnation).

La présente invention est donc remarquable en ce sens qu'elle constitue une solution alternative viable aux supports textiles revêtus actuellement sur le marché, destinés à la fabrication de soufflets d'intercommunication. L'invention permet notamment la fabrication de soufflets d'intercommunication connectant (reliant) les compartiments de véhicules de transport en commun, qui ont les propriétés mécaniques requises pour ce type d'application (i.e., rigidité (« effet de poutre »), et résistance à la déchirure et à la délamination), tout en gardant les coûts de fabrication à un niveau raisonnable.

Le contenu des protocoles relatifs aux normes internationales (ISO), françaises et européennes (NF, EN) citées dans le présent document est incorporé par référence dans la présente dans son intégralité. Ces protocoles sont en vente au public sur le site internet de l'AFNOR (http://www.boutique.afnor.org).

D'autres caractéristiques et avantages de la présente invention apparaîtront à la lecture des exemples ci-dessous, illustrés par les figures annexées, donnés à titre illustratif.

### Brève description des figures

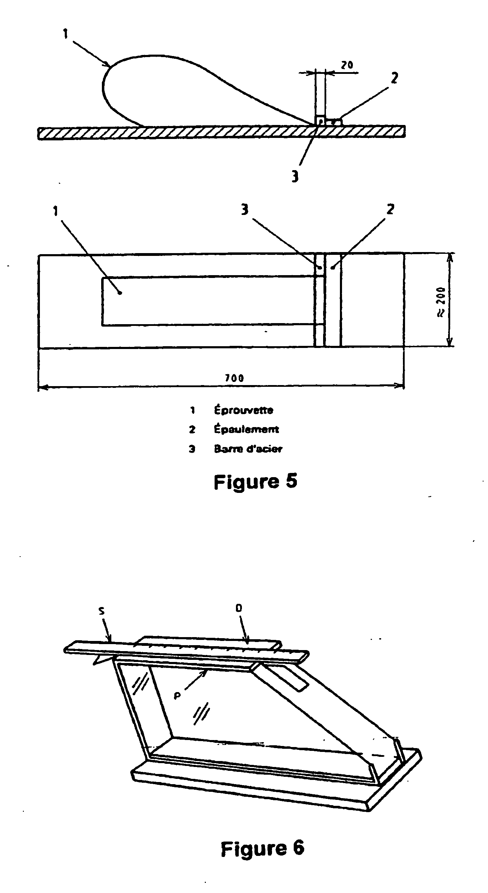

□ La Figure 1 représente deux types de soufflets d'intercommunication existant sur le marché. Figure 1A : soufflet « plié ». Figure 1B : soufflet « ondulé ».
□ La figure 2 représente une vue schématique de la structure d'un support textile revêtu double-pli de l'art antérieur destiné à la fabrication d'un soufflet.
□ La Figure 3 représente un tableau détaillant certaines propriétés de fibres textiles disponibles sur le marché, notamment des propriétés mécaniques et de toxicité.
□ La Figure 4 représente des exemples de points de jonction de tissus double-étoffe. Les carrés gris clair représentent les endroits où les deux tissus constituant la double-étoffe sont liés via leurs fils de trame/chaîne. - La Figure 5 représente le schéma d'un dispositif de détermination de la rigidité de supports textiles revêtus selon la méthode de la boucle plate.
- La Figure 6 représente le schéma d'un dispositif de détermination de la rigidité de supports textiles revêtus selon la méthode de la longueur fléchie sous son poids.
- La Figure 7 représente un schéma des supports textiles revêtus objets de l'exemple 4. Figure 7A : tissu double-pli revêtu. Figure 7B : tissu simple-pli revêtu. Figure 7C : tissu double-étoffe revêtu.

### EXEMPLES

### Exemple 1 : Préparation d'un tissu double-étoffe revêtu d'une matière élastomère par calandrage

### a) Tissu double-étoffe

Le tissu double-étoffe est constitué de 2 tissus à base de fils polyester haute ténacité ayant un titre de 1100 décitex et une contexture de 8,6/9 fils au centimètre (c'est-à-dire 8,6 fils par centimètre dans le sens chaîne, et 9 fils par centimètre dans le sens trame).

La liaison entre les deux couches de tissus est assurée par des points de jonction espacés de 5 mm en chaîne et en trame ; i.e, 8 points de jonction au cm² (voir Figure 4).

### b) Elastomère

La matière élastomère est à base de polyéthylène chlorosulfoné (CSM). Celui-ci peut être obtenu de la société Dupont Performance Elastomère (USA) « Hypalon^{®} », Tosoh (Japon) « Toso CSM^{®} » ou Jining (Chine).

### c) Enduction

La matière élastomère est disposée sur le tissu double-étoffe par calandrage selon le procédé suivant :
Préalablement au dépôt de la matière élastomère, 60 à 70 g/m² de pâte d'adhérisation est déposée sur les deux faces du tissu double-étoffe. Cette pâte est déposée par la technique d'imprégnation. Cette pâte est une composition ayant un extrait sec de 30%.

Une opération de séchage est ensuite effectuée pour sécher cette pâte d'adhérisation et éliminer les solvants (toluène et méthyléthylcétone (MEC)), à une température supérieure à 160°C.

Le dépôt de la matière élastomère sur le tissu double-étoffe adhérisé est effectué par calandrage sur chacune des deux faces du textile (une couche par face).

### d) Vulcanisation

Après dépôt de la matière élastomère, un traitement thermique est effectué pour le réticuler. Celui-ci est effectué sur une machine en continue et sous pression. La température est comprise entre 180 et 185°C, de préférence 183°C.

### e) Propriétés

Le poids total du tissu double-étoffe revêtu de matière élastomère ainsi obtenu est de 1200g/m².

Les trois caractéristiques importantes de ce tissu revêtu sont les suivantes :
- Rigidité: détermination de la rigidité selon la norme NF EN 1735: 58 à 70 mm dans le sens longitudinal et
- transversal, c'est-à-dire dans le sens de la chaine et de la trame (méthode 1 dite « à la boucle plate »).
- Résistance à la déchirure : déchirure pantalon selon norme ISO 4674-1, méthode B: 40 à 50 daN.
- Résistance à la délamination entre les 2 couches de tissus : adhérence par pelage selon norme ISO 2411: 20 à 30daN/5cm.

### Exemple 2 : Préparation d'un tissu double-étoffe revêtu d'une matière élastomère par extrusion filière plate.

Le mode opératoire est le même que celui du procédé de calandrage de l'exemple 1 (c'est-à-dire, avec adhérisation préalable). La calandre est remplacée par une extrudeuse filiaire plate. Le dépôt peut aller de 100 à 1500 g/m² mais en une seule opération (monocouche).

### Exemple 3 : Méthodes de détermination de la rigidité d'un tissu double-étoffe revêtu d'une matière élastomère selon la présente invention.

La rigidité (ou inversement la souplesse) d'un tissu double-étoffe revêtu selon l'invention peut être déterminée selon la norme européenne et française NF EN 1735.
Deux méthodes sont à dispositions selon la norme précitée.

### Méthode de la boucle plate

Le principe est le suivant : on forme une boucle sur une bande rectangulaire de support textile revêtu, posée sur un plan horizontal, en superposant les deux extrémités qui sont ensuite reliées ensemble sous une barre en acier. La hauteur de la boucle est mesurée. La souplesse est caractérisée par la hauteur de la boucle : plus la hauteur de la boucle est petite, plus la souplesse est grande. Inversement, plus la hauteur de la boucle est grande, plus la rigidité est grande.

L'appareil d'essai est typiquement composé des éléments suivants (voir Figure 5):
- une planche plate rectangulaire munie, près de l'une de ses extrémités, d'un épaulement dont la face est perpendiculaire à l'axe de la planche (les dimensions indiquées sur la figure 5 sont données à titre d'exemple ; elles peuvent être augmentées pour permettre la fixation de plusieurs éprouvettes sur la même planche).
- une barre en acier inoxydable, d'environ 200 mm de longueur et de section carrée d'environ 20 mm de côté.
- une règle graduée en millimètres.

En règle générale, la température des éprouvettes (échantillons testés) influe fortement sur la valeur de la souplesse. Il est donc nécessaire de conditionner celles-ci durant au moins 24 heures dans l'une des atmosphères normales de l'EN ISO 2231 et de pratiquer les essais dans la même atmosphère. Pour éviter toute déformation des éprouvettes, le conditionnement doit être effectué sur une surface horizontale, la face qui doit former l'extérieur de la boucle étant tournée vers le haut.

L'éprouvette a la forme d'un rectangle de 600 mmm **±** 5 mm de longueur et de 100 mm ± 2 mm de largeur.

On utilise trois éprouvettes découpées dans le sens longitudinal et trois éprouvettes découpées dans le sens transversal du support textile revêtu à tester.

Le prélèvement est typiquement prélevé dans la largeur utile du rouleau selon la norme ISO 2286-1.

La surface de la planche est saupoudrée uniformément avec du stéarate de zinc ou du talc. En tenant les extrémités de l'éprouvette entre les doigts, on pose celle-ci sur la planche de façon que l'une de ses faces repose sur la planche et qu'une extrémité soit pressée contre l'épaulement (le choix de la face à utiliser dépend de la destination du produit. L'essai peut aussi être à nouveau effectué après avoir renversé l'éprouvette sur la face opposée).

L'autre extrémité est reliée à la première de manière à former une boucle, en la pressant aussi contre l'épaulement.

La barre en acier est mise en position sur les deux extrémités superposées. L'éprouvette est maintenue dans cette position pendant 5 minutes ± 0,5 minute.

On mesure sur chaque éprouvette, à l'aide de la règle graduée, les hauteurs maximales par rapport à la planche des deux bords de la boucle (trois éprouvettes découpées dans le sens longitudinal et trois dans le sens transversal). Il y a donc deux valeurs par éprouvette, et douze valeurs en tout.

La souplesse est donnée par la moyenne arithmétique des six valeurs obtenues dans le sens longitudinal et des six valeurs obtenues dans le sens transversal.

### Méthode de la longueur fléchie sous son poids

Le principe est le suivant : on pose une bande rectangulaire de support textile revêtu sur une plate-forme horizontale. Lorsque la bande est déplacée sur la plate-forme, l'extrémité quitte la plate-forme, puis plie sous son propre poids. Lorsque la bande est suffisamment avancée, l'extrémité touche un plan incliné. La longueur de flexion est la longueur de l'éprouvette entre le bord de la plate-forme et le point 0 de la règle. Cette longueur est donnée par lecture directe sur la règle s'il n'y a pas eu glissement.

L'appareil d'essai est typiquement composé des éléments suivants (voir Figure 6):
- une plate-forme P horizontale traitée sur sa face supérieure pour permettre le glissement aisé de l'éprouvette
- une règle S, graduée, rigide (une pièce métallique d'environ 25 mm de large convient). La face inférieure de la règle S est recouverte d'un matériau à fort coefficient de friction (feuille de caoutchouc par exemple) de telle façon que, lorsqu'on fait avancer la règle S, elle entraine vers l'avant l'éprouvette lacée entre la règle et la plate-forme P
- un plan incliné qui forme un angle de 41°30' ± 30' sous l'horizontale (la plage de mesures dépend de la taille du dispositif).

Comme pour la méthode de la boucle plate, la température des éprouvettes influe fortement sur la valeur de la souplesse. Il est donc nécessaire de conditionner celles-ci durant au moins 24 heures dans l'une des atmosphères normales de l'EN ISO 2231 et de pratiquer les essais dans la même atmosphère. Pour éviter toute déformation des éprouvettes, le conditionnement doit être effectué sur une surface horizontale, la face qui doit être vers le haut sur le flexomètre étant tournée vers le haut.

L'éprouvette a la forme d'un rectangle de 25 mmm ± 1 mm de large et d'une longueur telle qu'elle permette la détermination de la longueur de flexion. Une longueur de 200 mm est généralement suffisante.

On utilise généralement 10 éprouvettes découpées dans le sens longitudinal et 10 éprouvettes découpées dans le sens transversal.

Le prélèvement est typiquement prélevé dans la largeur utile du rouleau selon la norme ISO 2286-1.

Le flexomètre est placé sur une table de niveau. L'éprouvette est placée entre la plate-forme P et la règle S de façon à ce que la ligne D, le 0 de la règle graduée, et l'extrémité de l'éprouvette coïncident. On pousse la règle de façon que l'extrémité de l'éprouvette s'avance au-dessus du plan incliné, plie sous l'effet de son propre poids et vienne enfin toucher le plan incliné. L'essai dure environ 10 secondes.

La longueur de flexion est ma longueur de l'éprouvette entre le bord de la plate-forme et le point 0 de la règle. Cette longueur est donnée par lecture direcet sur la règle s'il n'y a pas eu glissement.

On répète l'essai sur les autre éprouvettes en changeant la face en contact avec la plate-forme.

Les longueurs de flexion sont mesurées séparément en sens longitudinal, puis transversal sur chaque face.

Pour chaque mesure, il y a cinq éprouvettes. Le résultat est la moyenne arithmétique des cinq mesures réalisées en centimètres.

### Exemple 4 : Exemples comparatifs de rigidité de supports

### textiles revêtus

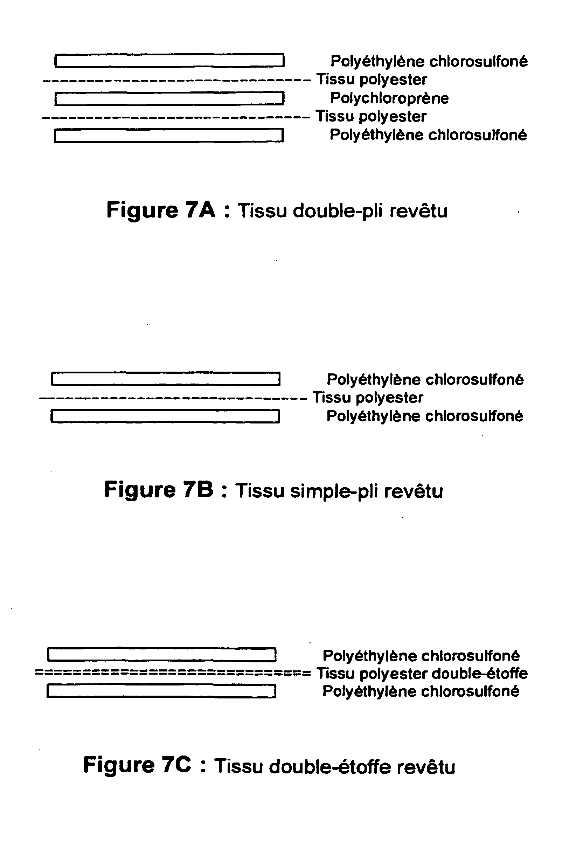

La rigidité de trois types de supports textiles revêtus est mesurée selon la méthode de la boucle plate décrite à l'Exemple 3 ci-dessus.
Les supports textiles revêtus testés sont illustrés à la Figure 7.

Les résultats sont répertoriés dans le tableau ci-dessous :

| **Type de textile revêtu** | **Rigidité (mm) dans le sens longitudinal** |
|---|---|
| Tissu polyester double-pli revêtu de matière élastomère à base de polyéthylène chlorosulfoné (CSM ou hypalon®) | 60 |
| Tissu polyester simple-pli revêtu de matière élastomère à base de polyéthylène chlorosulfoné (CSM ou hypalon®) | 50 |
| Tissu polyester double-étoffe revêtu de matière élastomère à base de polyéthylène chlorosulfoné (CSM ou hypalone®) | 60 |

Le tissu double-étoffe revêtu selon la présente invention est beaucoup plus rigide que son homologue simple-pli, et est aussi performant en rigidité que le double-pli revêtu.

Ainsi, le tissu double-étoffe revêtu selon la présente invention est bien supérieur aux supports textiles revêtus actuellement utilisés pour la fabrication de soufflets d'intercommunication de véhicules de transport en commun, puisqu'il a les avantages des supports textiles double-pli en termes de rigidité, sans les inconvénients (mauvaise résistance à la déchirure et à la délamination). De plus, le tissu double-étoffe revêtu selon la présente invention est moins cher.

### Liste des Références

[1] « Synthèse, propriétés et technologies des élastomères » réalisé par l'IFOCA (Institut de Formation du Caoutchouc) et édité par le groupe français d'études et d'application des polymères en octobre 1984.
[2] DE 40 07 862
[3] DE 10 2006 061503

## Revendications

1. Soufflet d'intercommunication de compartiments d'un véhicule de transport en commun ou d'une rampe d'accès amovible pour avion, **caractérisé en ce que** ledit soufflet est constitué d'un support textile revêtu d'une matière élastomère comprenant un tissu double-étoffe dont les deux faces sont recouvertes d'une matière élastomère, dans lequel les fils textiles reliant les deux tissus du tissu double-étoffe sont des fils non-élastiques, et les fils textiles du tissu double-étoffe ont une ténacité de 50 à 110 cN/Tex selon la norme ISO.13934-1, et un allongement à la rupture supérieur à 10% selon la norme ISO.13934-1, ledit tissu double-étoffe étant constitué de deux tissus, distincts et superposés, et sans espace entre eux, lesquels sont intimement reliés entre eux par intermittence à espaces réguliers par des fils de trame des deux tissus, avec la participation du fil de chaîne, et ne bougent pas l'un par rapport à l'autre ;
ledit support textile revêtu ayant une rigidité de 58 à 70 mm dans le sens longitudinal et transversal selon la norme NF EN 1735.

2. Soufflet d'intercommunication selon la revendication 1 dans lequel la matière élastomère comprend un élastomère choisi parmi le terpolymère d'éthylène propylène et diène, le polychloropréne, un copolymère de nitrile acrylique hydrogéné et de butadiène, un copolymère d'éthylène et d'acrylate de méthyle ou autres acrylates, un polyuréthane, le polychloroéthylène, le polyéthylène chlorosulfoné, un copolymère d'épichlorhydrine, un élastomère de silicone vulcanisable à chaud, un élastomère fluorocarboné, ou d'un mélange de ceux-ci.

3. Soufflet d'intercommunication selon la revendication 1 ou 2, dans lequel le tissu double-étoffe comprend des fils polyamide, polyester, m-aramide, p-aramide, vectran HS, polyimide, polyamide-imide, homopolymère acrylique, polyacrylonitrile oxydé, phénolique, polybenzimidazole, polysulfure de phénylène, polytétrafluoroéthylène, polyétheréthercétone, poly(1-oxotriméthylène), polyphénylsulfone, ou un mélange de ceux-ci.

4. Soufflet d'intercommunication selon l'une quelconque des revendications 1 à 3, dans lequel les fils du tissu double-étoffe ont une masse linéique de 500 à 2200 décitex.

5. Soufflet d'intercommunication selon l'une quelconque des revendications 1 à 4, dans lequel le tissu double-étoffe a une contexture de 8 à 11 fils/cm en chaîne et 8 à 10 fils/cm en trame.

6. Soufflet d'intercommunication selon l'une quelconque des revendications 1 à 5, dans lequel le nombre de points de jonction du tissu double-étoffe est de 2 à 20 points/cm².

7. Soufflet d'intercommunication selon l'une quelconque des revendications 1 à 6, dans lequel la matière élastomère comprend le polyéthylène chlorosulfoné, et le tissu double-étoffe comprend des fils polyester de masse linéique de 1100 décitex, a une contexture de 8,6 fils/cm en chaîne et 9 fils/cm en trame, et a un nombre de points de jonction de 8 points/cm².

8. Procédé de connexion de deux compartiments d'un véhicule de transport en commun comprenant une étape de fixation des extrémités d'un soufflet d'intercommunication selon l'une quelconque des revendications 1 à 7 sur les faces frontales orientées l'une vers l'autre de deux compartiments dudit véhicule de transport en commun.

9. Véhicule de transport en commun comprenant des compartiments connectés entre eux par un soufflet d'intercommunication selon l'une quelconque des revendications 1 à 7.

10. Utilisation d'un tissu double-étoffe pour la fabrication de soufflets d'intercommunication connectant deux compartiments d'un véhicule de transport en commun, ou d'un soufflet d'intercommunication d'une rampe d'accès amovible pour avion.

## Patentansprüche

1. Faltenbalg zwischen Abteilen eines öffentlichen Verkehrsmittels oder einer abnehmbaren Zugangsrampe für ein Flugzeug, **dadurch gekennzeichnet, dass** der Balg aus einem textilen Träger besteht, der mit einem Elastomermaterial beschichtet ist, umfassend ein zweilagiges textiles Flächengebilde, dessen beide Seiten mit einem Elastomermaterial bedeckt sind, in dem die Textilfasern, die die beiden Gewebe des zweilagigen textilen Flächengebildes verbinden, nichtelastische Fasern sind, und die Textilfasern des zweilagigen textilen Flächengebildes eine Zugfestigkeit von 50 bis 110 cN/Tex gemäß der Norm ISO.13934-1 und eine Bruchdehnung größer als 10 % gemäß der Norm ISO.13934-1 aufweisen, wobei das zweilagige textile Flächengebilde aus zwei verschiedenen und ohne Zwischenraum übereinander gelegten Geweben besteht, die abwechselnd in regelmäßigen Abständen durch Schussfaden der beiden Gewebe, unter Beteiligung des Kettfadens eng miteinander verbunden sind und sich gegeneinander nicht bewegen;
wobei der beschichtete textile Träger eine Steifigkeit von 58 bis 70 mm in Längs- und Querrichtung gemäß der Norm NF EN 1735 aufweist.

2. Faltenbalg nach Anspruch 1, wobei das Elastomermaterial ein Elastomer umfasst, ausgewählt aus Ethylen-Propylen-Dien-Terpolymer, Polychloropren, einem hydrogenierten Acrylnitril-Butadien-Copolymer, einem Copolymer aus Ethylen-Methylacrylat oder anderen Acrylaten, einem Polyurethan, Polychlorethylen, chlorsulfoniertem Polyethyl, einem Epichlorhydrin-Copolymer, einem heißvulkanisierbaren Silikonelastomer, einem Fluorelastomer oder einem Gemisch davon.

3. Faltenbalg nach Anspruch 1 oder 2, wobei das zweilagige textile Flächengebilde Polyamid-, Polyester-, m-Aramid-, p-Aramid-, Vectran-HS-, Polyimid-, Polyamidimid-, Acrylhomopolymer-, oxidierte Polyacrylonitril-, Phenol-, Polybenzimidazol-, Polyphenylensulfid-, Polytetrafluorethylen-, Polyetheretherketon-, Poly(1-oxotrimethylen)-, Polyphenylsulfonfasern oder ein Gemisch davon umfasst.

4. Faltenbalg nach einem der Ansprüche 1 bis 3, wobei die Fasern des zweilagigen textilen Flächengebildes eine Feinheit von 500 bis 2.200 Decitex aufweist.

5. Faltenbalg nach einem der Ansprüche 1 bis 4, wobei das zweilagige textile Flächengebilde eine Gewebekonstruktion von 8 bis 11 Kettfäden/cm und 8 bis 10 Schussfäden/cm aufweist.

6. Faltenbalg nach einem der Ansprüche 1 bis 5, wobei die Anzahl der Verbindungspunkte des zweilagigen textilen Flächengebildes bei 2 bis 20 Punkten/cm² liegt.

7. Faltenbalg nach einem der Ansprüche 1 bis 6, wobei das Elastomermaterial chlorsulfoniertes Polyethylen umfasst, und das zweilagige textile Flächengebilde Polyesterfasern mit einer Feinheit von 1.100 Decitex bei einer Gewebekonstruktion von 8,6 Kettfäden/cm und 9 Schussfäden/cm und bei einer Anzahl von Verbindungspunkten von 8 Punkten/cm² umfasst.

8. Verfahren zum Verbinden von zwei Abteilen eines öffentlichen Verkehrsmittels, umfassend einen Schritt zum Befestigen der Enden eines Faltenbalgs nach einem der Ansprüche 1 bis 7 an den zueinander ausgerichteten Stirnseiten von zwei Abteilen des öffentlichen Verkehrsmittels.

9. Öffentliches Verkehrsmittel, umfassend Abteile, die miteinander durch einen Faltenbalg nach einem der Ansprüche 1 bis 7 verbunden sind.

10. Verwendung eines zweilagigen textilen Flächengebildes zur Herstellung von Faltenbälgen, die zwei Abteile eines öffentlichen Verkehrsmittels miteinander verbinden, oder eines Faltenbalgs einer abnehmbaren Flugzeugzugangsrampe.

## Claims

1. Intercommunication bellows for compartments of a public transport vehicle or for a removable aircraft access ramp, **characterized in that** said bellows consists of a textile support coated with an elastomer material comprising a double-weave fabric both faces of which are covered with an elastomer material, in which the textile yarns connecting the two fabrics of the double-weave fabric are non-elastic yarns, and the textile yarns of the double-weave fabric have a tenacity of 50 to 110 cN/tex according to the ISO 13934-1 standard, and an elongation at break of greater than 10% according to the ISO 13934-1 standard, said double-weave fabric consisting of two distinct and superposed fabrics with no space between them, which are intimately connected to one another intermittently at regular intervals by weft yarns of the two fabrics, with the participation of the warp yarn, and do not move with respect to one another;
said coated textile support having a stiffness of 58 to 70 mm in the longitudinal and cross directions according to the NF EN 1735 standard.

2. Intercommunication bellows according to claim 1, in which the elastomer material comprises an elastomer selected from ethylene propylene and diene terpolymer, polychloroprene, a hydrogenated acrylonitrile and butadiene copolymer, a copolymer of ethylene and methyl acrylate or other acrylates, a polyurethane, poly-chloroethylene, chlorosulphonated polyethylene, an epichlorohydrin copolymer, a high-temperature vulcanizable silicone elastomer, a fluorocarbon elastomer, or a mixture thereof.

3. Intercommunication bellows according to claim 1 or 2, in which the double-weave fabric comprises polyamide, polyester, m-aramid, p-aramid, vectran HS, polyimide, polyamide-imide, acrylic homopolymer, oxidized polyacrylonitrile, phenolic, polybenzimidazole, polyphenylene sulphide, polytetrafluoro-ethylene, polyether ether ketone, poly(1-oxotrimethylene), polyphenylsulphone yarns or a mixture thereof.

4. Intercommunication bellows according to any one of claims 1 to 3, in which the yarns of the double-weave fabric have a linear density of 500 to 2200 decitex.

5. Intercommunication bellows according to any one of claims 1 to 4, in which the double-weave fabric has a thread count of 8 to 11 yarns/cm in warp and of 8 to 10 yarns/cm in weft.

6. Intercommunication bellows according to any one of claims 1 to 5, in which the number of junction points of the double-weave fabric is from 2 to 20 points/cm².

7. Intercommunication bellows according to any one of claims 1 to 6, in which the elastomer material comprises chlorosulphonated polyethylene, and the double-weave fabric comprises polyester yarns having a linear density of 1100 decitex, has a thread count of 8.6 yarns/cm in warp and of 9 yarns/cm in weft, and has a number of junction points of 8 points/ cm².

8. Method for connecting two compartments of a public transport vehicle comprising a step of fastening the ends of an intercommunication bellows according to any one of claims 1 to 7 to the the front sides facing each other of two compartments of said public transport vehicle.

9. Public transport vehicle comprising compartments connected together by an intercommunication bellows according to any one of claims 1 to 7.

10. Use of a double-weave fabric for manufacturing intercommunication bellows connecting two compartments of a public transport vehicle, or an intercommunication bellows of a removable aircraft access ramp.
